(19)

Europäisches Patentamt
European Patent Office
Office européen des brevets

(11) **EP 4 572 178 A1**

(12) **EUROPEAN PATENT APPLICATION**
published in accordance with Art. 153(4) EPC

(43) Date of publication:
**18.06.2025 Bulletin 2025/25**

(21) Application number: **23852297.3**

(22) Date of filing: **12.07.2023**

(51) International Patent Classification (IPC):
$H04B\ 7/15^{(2006.01)}$ $\qquad$ $H04L\ 5/02^{(2006.01)}$

(52) Cooperative Patent Classification (CPC):
**H04B 7/15; H04L 5/02**

(86) International application number:
**PCT/JP2023/025662**

(87) International publication number:
**WO 2024/034314 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.08.2022 JP 2022126990**

(71) Applicant: **National Institute of Information and
Communications Technology
Koganei-shi,
Tokyo 184-8795 (JP)**

(72) Inventor: **TAKIZAWA Kenichi
Koganei-shi, Tokyo 184-8795 (JP)**

(74) Representative: **Rings, Rolf
Klingseisen, Rings & Partner
Patentanwälte
Postfach 10 15 61
80089 München (DE)**

(54) **NON-REGENERATION RELAY COMMUNICATION SYSTEM**

(57) [Problem]
Provided is a non-regenerative relay communication system capable of performing non-regenerative relay communication using full-duplex communication.
[Solution]
A non-regenerative relay communication system performs non-regenerative relay communication between a first communication station and a second communication station via a relay station. The system includes first delay calculation means that calculates a first signal-to-noise ratio in communication between the first communication station and the relay station and a first propagation delay that indicates a delay in the communication between the first communication station and the relay station based on a signal, second delay calculation means that calculates a second signal-to-noise ratio in communication between the second communication station and the relay station and a second propagation delay that indicates a delay in the communication between the second communication station and the relay station based on a signal, and communication determination means that performs the non-regenerative relay communication based on the first signal-to-noise ratio and the first propagation delay, and the second signal-to-noise ratio and the second propagation delay.

Fig. 1

**Description**

TECHNICAL FIELD

The present invention relates to a non-regenerative relay communication system.

BACKGROUND ART

Recently, it is required to achieve ultra-low latency communications that perform communication with a delay of a sub-millisecond or less using 5G communications. The ultra-low latency communications are expected to achieve techniques of, for example, remote control of a mobility terminal including an autonomous vehicle and an xR (cross reality).
On the other hand, to expand coverage of the communication area of the ultra-low latency communications, relay communications using a relay station are indispensable. Therefore, relay communications using regenerative relay in which demodulation and decoding are performed and then coding and modulation are performed again at a relay station are standardized in sidelink and the like.
However, when the relay communication using regenerative relay is performed, there has been a problem that due to a delay of a millisecond or more that occurs in a relay process, the coverage of the ultra-low latency communications cannot be expanded. To solve the problem, expectations are rising for non-regenerative relay in which demodulation and decoding are not performed and only a simple process and amplification are performed by a repeater. In view of this, for example, non-regenerative relay communication systems as described in Non-Patent Document 1 and Non-Patent Document 2 are attracting attention.
In the technique disclosed in Non-Patent Document 1, non-regenerative relay communication using half-duplex communication is disclosed. In the technique disclosed in Non-Patent Document 2, a technique in which the same time slot is used for transmission and reception to suppress self-interference with a FIR filter in non-regenerative relay communication is disclosed.
Non-Patent Document 1: H. Chen. A. B. Gershman, and S. Shahbazpanahi, "Filter-and-Forward Distributed Beamforming in Relay Networks with Frequency Selective Fading," IEEE Trans. On Signal Processing, vol. 58, no. 3, March 2010.
Non-Patent Document 2: Noguchi, Hayashi, Kaneko, and Sakai, "A Single Frequency Full-Duplex Radio Relay Station for Frequency Domain Equalization Systems," The Institute of Electronics, Information and Communication Engineers Technical Report, vol. SIP2011-109, January 2012.

DISCLOSURE OF THE INVENTION

PROBLEMS TO BE SOLVED BY THE INVENTION

However, the technique disclosed in Non-Patent Document 1 is premised on the non-regenerative relay communication using half-duplex communication, and it is not assumed to use the same time slot for transmission and reception. Therefore, there has been a problem that non-regenerative relay communication using full-duplex communication cannot be performed. Meanwhile, the technique disclosed in Non-Patent Document 2 premises that a relay station includes a plurality of antennas, such as an array antenna, and the antennas for transmission and reception are mutually different. Therefore, there has been a problem that, for example, when non-regenerative relay communication using full-duplex communication is performed, to reduce self-interference, channel estimations mutually different for the transmission and reception antennas are required.
The present invention is derived to solve the problems, and it is an object of the present invention to provide a non-regenerative relay communication system capable of performing non-regenerative relay communication using full-duplex communication.

SOLUTIONS TO THE PROBLEMS

A non-regenerative relay communication system according to a first invention is a non-regenerative relay communication system that performs non-regenerative relay communication between a first communication station and a second communication station via a relay station. The system includes first delay calculation means, second delay calculation means, and communication determination means. The first delay calculation means calculates a first signal-to-noise ratio in communication between the first communication station and the relay station and a first propagation delay that indicates a delay in the communication between the first communication station and the relay station based on a signal transmitted or received in the communication between the relay station and the first communication station. The second delay calculation means calculates a second signal-to-noise ratio in communication between the second communication station and the relay station and a second propagation delay that indicates a delay in the communication between the second communication station and the relay station based on a signal transmitted or received in the communication between the relay station and the second communication station. The communication determination means performs the non-regenerative relay communication based on the first signal-to-noise ratio and the first propagation delay calculated by the first delay calculation means and the second signal-to-noise ratio and the second propagation delay calculated by the second delay calculation means.

The non-regenerative relay communication system according to a second invention, which is in the first invention, further includes first matrix calculation means, second matrix calculation means, noise ratio calculation means, and selection means. The first matrix calculation means calculates a first communication channel matrix that indicates a change in a communication signal for each of communication channels between the two or more relay stations and the first communication station based on signals transmitted or received in communication between the two or more relay stations and the first communication station. The second matrix calculation means calculates a second communication channel matrix that indicates a change in a communication signal for each of communication channels between the two or more second communication stations and the first communication station based on signals transmitted or received in communication between the two or more second communication stations and the first communication station. The noise ratio calculation means calculates respective third signal-to-noise ratios in communication between the first communication station and the two or more relay stations from the first communication channel matrix calculated by the first matrix calculation means and respective fourth signal-to-noise ratios in communication between the first communication station and the two or more second communication stations from the second communication channel matrix calculated by the second matrix calculation means. The selection means selects the second communication station and the relay station that perform the non-regenerative relay communication from the two or more relay stations and the two or more second communication stations based on the respective third signal-to-noise ratios and the respective fourth signal-to-noise ratios calculated by the noise ratio calculation means.

The non-regenerative relay communication system according to a third invention, which is in the first invention, further includes process delay calculation means that calculates a process delay that indicates a delay for processing self-interference in the communication based on the signal transmitted or received in the communication between the relay station and the first communication station.

In the non-regenerative relay communication system according to a fourth invention, which is in the third invention, the communication determination means calculates an allowable delay that indicates an allowance of the delay in the communication between the relay station and the second communication station based on the first propagation delay calculated by the first delay calculation means and the process delay calculated by the process delay calculation means, and performs the non-regenerative relay communication based on the calculated allowable delay, the first signal-to-noise ratio, the second signal-to-noise ratio, and the second propagation delay.

In the non-regenerative relay communication system according to a fifth invention, which is in the fourth invention, when the calculated allowable delay is equal to or more than the second propagation delay, and the first signal-to-noise ratio and the second signal-to-noise ratio are equal to or more than threshold values, the communication determination means performs the non-regenerative relay communication.

In the non-regenerative relay communication system according to a sixth invention, which is in the second invention, the selection means selects the relay station in which the third signal-to-noise ratio calculated by the noise ratio calculation means is greater than the threshold value, and selects the second communication station in which the fourth signal-to-noise ratio calculated by the noise ratio calculation means is smaller than the threshold value.

EFFECTS OF THE INVENTION

According to the first invention to the sixth invention, the communication determination means performs the non-regenerative relay communication based on the first signal-to-noise ratio and the first propagation delay, and the second signal-to-noise ratio and the second propagation delay. This allows, for example, calculating the first signal-to-noise ratio and the first propagation delay, and the second signal-to-noise ratio and the second propagation delay based on a notification signal for performing the non-regenerative relay communication. Therefore, even when full-duplex communication is used, the non-regenerative relay communication can be efficiently performed while exceeding the cyclic prefix length is avoided when a relay signal is received by the second communication station.

Especially, according to the second invention, the selection means selects the second communication station and the relay station that perform the non-regenerative relay communication from the two or more relay stations and the two or more second communication stations based on the respective third signal-to-noise ratios and the respective fourth signal-to-noise ratios. This allows calculating the signal-to-noise ratio for each line based on a reference signal, thereby selecting the relay station and the second communication station as communication targets. Therefore, the non-regenerative relay communication can be more efficiently performed.

Especially, according to the third invention, the process delay calculation means calculates the process delay based on the signal transmitted or received in the communication between the relay station and the first communication station. This allows, for example, calculating the process delay based on the reference signal. Therefore, even when the full-duplex communication is used, the self-interference can be suppressed.

Especially, according to the fourth invention, the communication determination means performs the non-regenerative relay communication based on the calculated allowable delay, the first signal-to-noise ratio, the second signal-to-noise ratio, and the second propagation delay. Therefore, since whether to perform the non-regenerative relay communication can be determined by comparing the allowable delay with the second propagation delay, the non-regenerative relay communication can be more efficiently performed.

Especially, according to the fifth invention, when the calculated allowable delay is equal to or more than the second propagation delay, and the first signal-to-noise ratio and the second signal-to-noise ratio are equal to or more than threshold values, the communication determination means performs the non-regenerative relay communication. Therefore, even when the full-duplex communication is used, the non-regenerative relay communication can be efficiently performed while exceeding the cyclic prefix length is avoided when the relay signal is received by the second communication station.

Especially, according to the sixth invention, the selection means selects the relay station in which the third signal-to-noise ratio is greater than the threshold value, and selects the second communication station in which the fourth signal-to-noise ratio is smaller than the threshold value. This allows more efficient non-regenerative relay communication.

BRIEF DESCRIPTION OF THE DRAWINGS

Fig. 1(a) is an overall schematic diagram of a non-regenerative relay communication system when one base station is used.

Fig. 1(b) is an overall schematic diagram of the non-regenerative relay communication system when a central base station and a distributed base station are used.

Fig. 2(a) is a schematic diagram illustrating an exemplary configuration of a control device according to the embodiment.

Fig. 2(b) is a schematic diagram illustrating exemplary functions of the control device according to the embodiment.

Fig. 3(a) is a schematic diagram illustrating an exemplary configuration of a relay station when one antenna is provided according to the embodiment.

Fig. 3(b) is a schematic diagram illustrating an exemplary configuration of the relay station when two antennas are provided according to the embodiment.

Fig. 4 is a schematic diagram illustrating an exemplary configuration of a baseband signal processing circuit according to the embodiment.

Fig. 5 illustrates a flow of a process of the non-regenerative relay communication system.

DESCRIPTION OF PREFERRED EMBODIMENTS

The following describes a non-regenerative relay communication system to which the present invention is applied in detail with reference to the drawings.

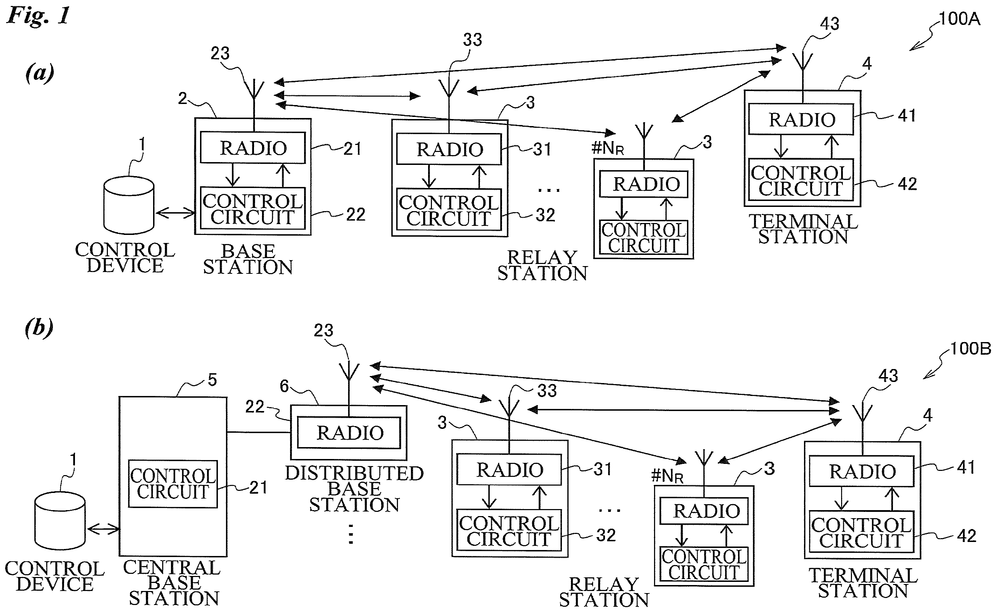

Fig. 1(a) is an overall schematic diagram of a non-regenerative relay communication system 100 when one base station 2 is used. As illustrated in Fig. 1(a), the non-regenerative relay communication system 100 includes a control device 1, a base station 2 connected to the control device 1, a relay station 3 that communicates with the base station 2, and a terminal station 4 that communicates with the base station 2 and the relay station 3. The non-regenerative relay communication system 100 may include the two or more relay stations 3 and the two or more terminal stations 4.

Fig. 1(b) is an overall schematic diagram of the non-regenerative relay communication system 100 when a central base station 5 and a distributed base station 6 are used. As illustrated in Fig. 1(b), the non-regenerative relay communication system 100 includes the control device 1, the central base station 5 connected to the control device 1, the distributed base station 6 that communicates with the central base station 5, the relay station 3 that communicates with the distributed base station 6, and the terminal station 4 that communicates with the distributed base station 6 and the relay station 3. The non-regenerative relay communication system 100 may include the two or more distributed base stations 6, the two or more relay stations 3, and the two or more terminal stations 4.

The control device 1 controls non-regenerative relay communication. As the control device 1, an electronic device, such as a personal computer (PC), is used, and additionally, an electronic device, such as a smartphone, a tablet terminal, a wearable device, and an Internet of Things (IoT) device, a single board computer, or the like may be used.

The base station 2 is a communication station that communicates with the terminal station 4. The base station 2 may be a first communication station BS that transmits a signal to the terminal station 4, or may be a second communication station UE that receives a signal transmitted from the terminal station 4. The base station 2 may perform the non-regenerative relay communication with the terminal station 4 via the relay station 3. The base station 2 includes a radio 21 that processes a communication signal, a control circuit 22 that is connected to the radio 21 and controls the communication, and an antenna 23 that is connected to the radio 21 and transmits and receives the signal. The base station 2 may include the two or more antennas 23 like an array antenna or the like.

The terminal station 4 is configured by a terminal device that can perform wireless communication, for example, a laptop personal computer (PC), a mobile terminal, a smartphone, a tablet terminal, and a wearable device. The terminal station 4 may be a first communication station BS that transmits a signal to the base station 2, or may be a second communication station UE that receives a signal transmitted from the base station 2. The terminal station 4 includes a radio 41 that processes a communication signal, a control circuit 42 that is connected to the radio 41 and controls the communication, and an antenna 43 that is connected to the radio 41 and transmits and receives the signal. The terminal station 4 may include the two or more antennas 43 like an array antenna or the like.

The relay station 3 functions as what is called a repeater between the base station 2 and the terminal station 4, and functions as an interface between a public communications network including the Internet and the like and the base station 2 and the terminal station 4. That is, the relay station 3 functions as relay means that allows the base station 2 and the terminal station 4 to transmit and receive data with the public communications network including the Internet and the like via the relay station 3.

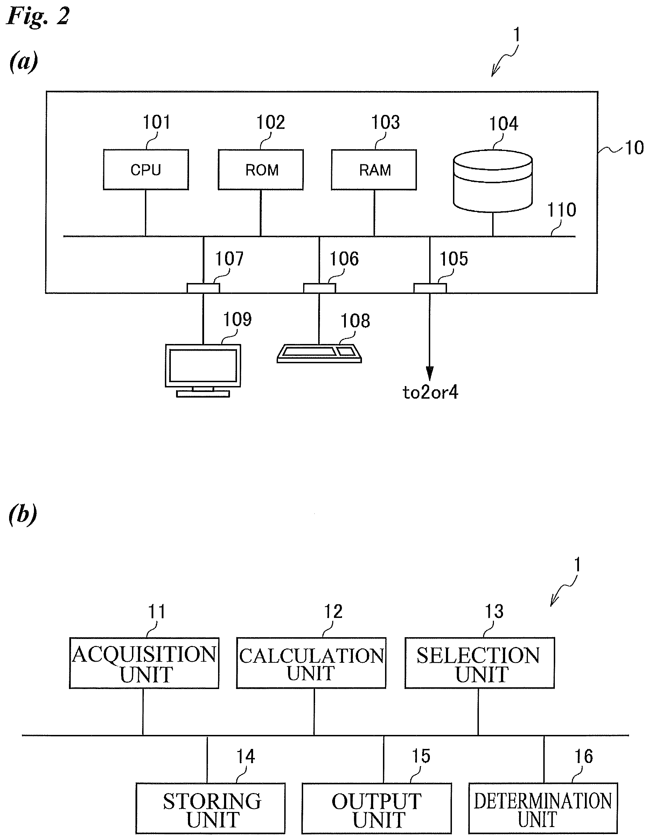

Next, with reference to Fig. 2, an exemplary control device 1 according to the embodiment is described. Fig. 2(a) is a schematic diagram illustrating an exemplary configuration of the control device 1 according to the embodiment. Fig. 2(b) is a schematic diagram illustrating exemplary functions of the control device 1 according to the embodiment.

For example, as illustrated in Fig. 2(a), the control device 1 includes a housing 10, a central processing unit (CPU) 101, a read only memory (ROM) 102, a random access memory (RAM) 103, a storage unit 104, and I/Fs 105 to 107. The CPU 101, the ROM 102, the RAM 103, the storage unit 104, and the I/Fs 105 to 107 are mutually connected by an internal bus 110.

The CPU 101 controls the whole control device 1. The ROM 102 stores an operation code of the CPU 101. The RAM 103 is a work area used in the operation of the CPU 101. The storage unit 104 stores various kinds of information. As the storage unit 104, for example, in addition to a hard disk drive (HDD), a data storage device, such as a solid state drive (SSD), an SD card, and a miniSD card, is used. For example, the control device 1 may include a graphics processing unit (GPU) (not illustrated).

The I/F 105 is an interface for transmitting and receiving various kinds of information via a communications network. The I/F 106 is an interface for transmitting and receiving information with an input unit 108. As the input unit 108, for example, a keyboard is used, and a user or the like using the control device 1 inputs various kinds of information or a control command or the like of the control device 1 via the input unit 108. The I/F 107 is an interface for transmitting and receiving various kinds of information with a display unit 109. The display unit 109 outputs various kinds of information, such as an identification result, stored in the storage unit 104, a process status of the control device 1, or the like. As the display unit 109, a display is used, and for example, a touch panel type may be used.

The display unit 109 displays various kinds of information. The display unit 109 displays, for example, information on the relay station 3 that performs the non-regenerative relay communication.

Fig. 2(b) is a schematic diagram illustrating exemplary functions of the control device 1. The control device 1 includes an acquisition unit 11, a calculation unit 12, a selection unit 13, a storing unit 14, an output unit 15, and a determination unit 16. The acquisition unit 11, the calculation unit 12, the selection unit 13, the storing unit 14, the output unit 15, and the determination unit 16 illustrated in Fig. 2(b) are achieved by executing a program stored in the storage unit 104 or the like by the CPU 101 with the RAM 103 as a work area, and may be controlled by, for example, artificial intelligence.

The acquisition unit 11 acquires various kinds of information. The acquisition unit 11 acquires, for example, information on a reference signal transmitted from the relay station 3 and received by the base station 2. The frequency and the cycle of acquiring the various kinds of information by the acquisition unit 11 are appropriately set.

The calculation unit 12 processes the information acquired by the acquisition unit 11. The calculation unit 12 calculates, for example, a signal-to-noise ratio or a propagation delay based on the information on the reference signal acquired by the acquisition unit 11. The calculation unit 12 calculates a first signal-to-noise ratio $\Gamma_{BS \to Ri}$ in communication between the first communication station BS and the relay station 3 and a first propagation delay $\tau_{BS \to Ri}$ that indicates a delay in the communication between the first communication station BS and the relay station 3 based on a signal transmitted or received in the communication between the relay station 3 and the first communication station BS. The calculation unit 12 calculates a second signal-to-noise ratio $\Gamma_{UE \to Ri}$ in communication between the second communication station UE and the relay station 3 and a second propagation delay $\tau_{UE \to Ri}$ that indicates a delay in the communication between the second communication station UE and the relay station 3 based on a signal transmitted or received in the communication between the relay station 3 and the second communication station UE. The calculation unit 12 calculates a first communication channel matrix $H_{R \to BS}$ that indicates a change in a communication signal for each of communication channels between the two or more relay stations 3 and the first communication station BS based on signals transmitted or received in communication between the two or more relay stations 3 and the first communication station BS. The calculation unit 12 calculates a second propagation channel matrix that indicates a change in a communication signal for each of communication channels between the two or more second communication stations UE and the first communication station BS based on signals transmitted or received in communication between the two or more second communication stations UE and the first communication station BS. The calculation unit 12 calculates, for example, respective third signal-to-noise ratios in the communication between the first communication station BS and the two or more relay stations 3 from the calculated first communication channel matrix $H_{R \to BS}$, and respective fourth signal-to-noise ratios in the communication between the first communication station BS and the two or more second communication stations UE from the calculated second propagation channel matrix. The calculation unit 12 calculates, for example, a process delay $\tau_{R,i}$ that indicates a delay for processing self-interference in the communication based on the signal transmitted or received in the communication between the relay station 3 and the first communication station BS. The calculation unit 12 calculates, for example, an allowable delay $\tau_{UE \to R,max}$ that indicates the allowance of the delay in the communication between the relay station 3 and the second communication station UE based on the calculated first propagation delay $\tau_{BS \to Ri}$ and the calculated process delay TR,i.

The selection unit 13 selects the relay station 3 that performs the non-regenerative relay communication based on the signal-to-noise ratio calculated by the calculation unit 12. For example, the selection unit 13 selects the second communication station UE and the relay station 3 that perform the non-regenerative relay communication from the two or more relay stations and the two or more second communication stations UE based on the respective third signal-to-noise ratios and the respective fourth signal-to-noise ratios calculated by the calculation unit 12.

The determination unit 16 determines whether to perform the non-regenerative relay communication based on the propagation delay and the signal-to-noise ratio calculated by the calculation unit 12. For example, the determination unit 16 determines whether to perform the non-regenerative relay communication based on the first signal-to-noise ratio $\Gamma_{BS \to Ri}$, the first propagation delay $\tau_{BS \to Ri}$, the second signal-to-noise ratio $\Gamma_{UE \to Ri}$, and the second propagation delay $\tau_{UE \to Ri}$ calculated by the calculation unit 12.

The storing unit 14 retrieves the various kinds of information stored in the storage unit 104 as necessary. The storing unit 14 stores the various kinds of information acquired or output by the acquisition unit 11, the calculation unit 12, the selection unit 13, and the determination unit 16 in the storage unit 104.

The output unit 15 outputs various kinds of information. For example, the output unit 15 transmits a control command of the non-regenerative relay communication to the base station 2 via the I/F 105.

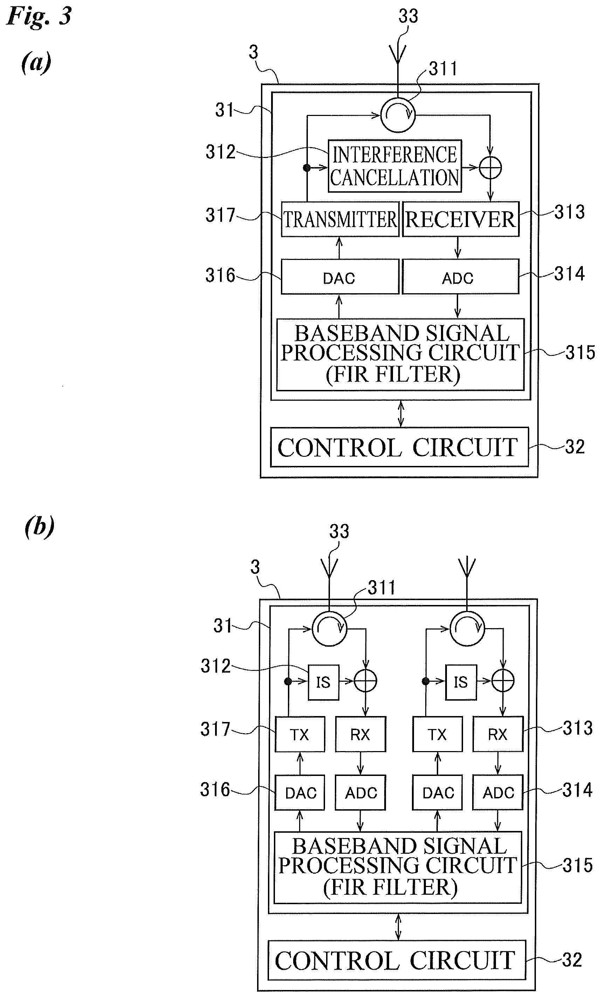

Fig. 3(a) is a schematic diagram illustrating an exemplary configuration of the relay station 3 when one antenna is provided according to the embodiment. The relay station 3 includes a radio 31 for processing the communication signal, a control circuit 32 that is connected to the radio 31 and controls the communication, and an antenna 33 that is connected to the radio 31 and transmits and receives the signal.

The radio 31 includes a circulator 311 connected to the antenna 33, a receiver 313 connected to the circulator 311, an analog digital converter (ADC) 314 connected to the receiver 313, a baseband signal processing circuit 315 connected to the ADC 314, the control circuit 32 connected to the baseband signal processing circuit 315, a digital analog converter (DAC) 316 connected to the baseband signal processing circuit 315, a transmitter 317 connected to the DAC 316, and an interference cancellation circuit 312 connected to the transmitter 317 and the receiver 313.

The circulator 311 outputs a signal to the receiver 313. While the circulator 311 has an isolation of about 30 dB, the isolation is not limited to this, and it may have any value.

The receiver 313 is a device for receiving the signal. The receiver 313 outputs the received signal to the ADC 314.

The ADC 314 converts the output analog signal into a digital signal. The ADC 314 outputs the converted digital signal to the baseband signal processing circuit 315.

The baseband signal processing circuit 315 is a finite impulse response (FIR) filter that filters the output digital signal. The baseband signal processing circuit 315 outputs the filtered signal to the control circuit 32. The baseband signal processing circuit 315 may output a signal for suppressing the self-interference output from the control circuit 32 to the DAC 316.

The DAC 316 converts the output signal into an analog signal. The DAC 316 outputs the converted analog signal to the transmitter 317.

The transmitter 317 up-converts the analog signal of the baseband signal and transmits the signal via the antenna 33. The transmitter 317 may output the signal for suppressing the self-interference to the interference cancellation circuit 312.

The interference cancellation circuit 312 is an interference suppression (IS). The interference cancellation circuit 312 synthesizes the signal for suppressing the self-interference with the signal received by the receiver 313, thereby suppressing the self-interference.

Fig. 3(b) is a schematic diagram illustrating an exemplary configuration of the relay station 3 when two antennas are provided according to the embodiment. The relay station 3 includes the radio 31, the control circuit 32 connected to the radio 31, and a plurality of the antennas 33 connected to the radio 31. The relay station 3 may use, for example, an array antenna as the antennas 33.

The radio 31 includes a plurality of the circulators 311 independently connected to the respective antennas 33, a plurality of the receivers 313 independently connected to the respective circulators 311, a plurality of the analog digital converters (ADCs) 314 independently connected to the respective receivers 313, the baseband signal processing circuit 315 connected to each of the ADCs 314, the control circuit 32 connected to the baseband signal processing circuit 315, a plurality of the digital analog converters (DACs) 316 connected to the baseband signal processing circuit 315, a plurality of the transmitters 317 independently connected to the respective DACs 316, and a plurality of the interference cancellation circuits 312 independently connected to the respective transmitters 317 and the respective receivers 313.

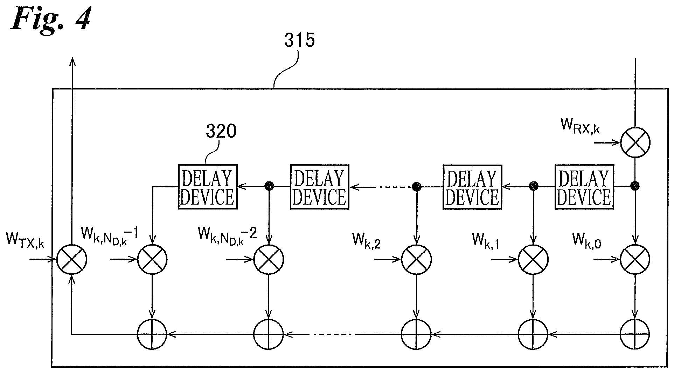

Fig. 4 is a schematic diagram illustrating an exemplary configuration of the baseband signal processing circuit 315 according to the embodiment. In Fig. 4, $w_{k,nD}$ indicates a coefficient (complex number) of a digital filter to the k-th (k = 1 to $N_{ant}$) antenna 33, and $w_{RX,k}$ and $w_{TX,k}$ indicate weights of the antenna 33 at the time of reception and transmission, respectively. D indicates a delay device 320. The baseband signal processing circuit 315 is, for example, a finite impulse response (FIR) filter, and is a filter using a finite impulse response. The baseband signal processing circuit 315 for the k-th antenna of the relay station 3 is configured by the $N_{D,k}$-stage delay device 320 and a complex weight vector $w_k = \{w_{k,0}, ..., w_{k,ND,k-1}\}$. The number $N_{D,k}$ of stages of the delay device 320 and the weight $w_k$ are obtained by the control circuit 32. The optimization with a restraint condition of the number of taps allows controlling the process delay $\tau_{R,i}$. In the baseband signal processing circuit 315, the number of the delay devices 320 of the FIR filter may be increased so as to satisfy a given delay time $\Delta i$.

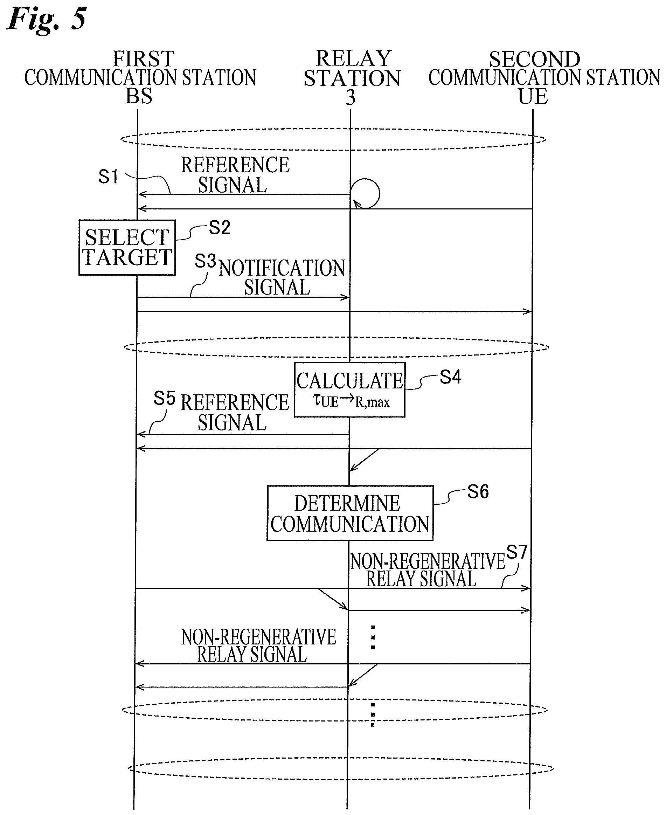

Next, the operation of the process of the non-regenerative relay communication system 100 is described with reference to Fig. 5. First, in Step S1, the two or more relay stations 3 as candidates for relay to perform the non-regenerative relay communication and the two or more second communication stations UE that require low-latency non-regenerative relay communication transmit uplink reference signals to the first communication station BS. In this case, the first communication station BS may be the base station 2, or may be the terminal station 4. The second communication station UE may be the base station 2, or may be the terminal station 4. In Step S1, the first communication station BS receives the uplink reference signals, and measures the first communication channel matrix $H_{R \to BS}$ that indicates the change in the communication signal for each of the communication channels between the two or more relay stations 3 and the first communication station BS and the second propagation channel matrix $H_{UE \to BS}$ that indicates the change in the communication signal for each of the communication channels between the first communication station BS and the two or more second communication stations UE. The first communication station BS notifies the control device 1 of the first communication channel matrix $H_{R \to BS}$ and the second propagation channel matrix $H_{UE \to BS}$. The communication channel matrix H is a complex propagation channel response, and can be expressed by, for example, $Y_{R \to BS} = H_{R \to BS} X_{R \to BS}$ having a received signal as $Y_{R \to BS}$ and a transmitted signal as $X_{R \to BS}$.

In Step S1, in the relay station 3, in a case of using full-duplex communication, when the reference signal is transmitted, the signal transmitted from the antenna couples to the receiver, thus causing the self-interference. In Step S1, the relay station 3 calculates the process delay $\tau_{R,i}$ that indicates the delay for processing the self-interference in the communication based on the reference signal. The relay station 3 measures the self-interference from the reference signal and sets each of RF and digital filters for suppressing the interference, thereby calculating the process delay $\tau_{R,i}$. The relay station 3 calculates the process delay $\tau_{R,i}$ using, for example, the baseband signal processing circuit 315. Therefore, even when the full-duplex communication is used, the self-interference can be suppressed.

Next, in Step S2, the control device 1 calculates the respective third signal-to-noise ratios in the communications between the first communication station BS and the two or more relay stations 3 from the first communication channel matrix $H_{R \to BS}$ notified in Step S1. In Step S2, the control device 1 calculates the respective fourth signal-to-noise ratios in the communications between the first communication station BS and the two or more second communication stations UE from the second propagation channel matrix $H_{UE \to BS}$ notified in Step S1. In Step S2, the control device 1 selects the second communication station UE and the relay station 3 that perform the non-regenerative relay communication from the two or more relay stations 3 and the two or more second communication stations UE based on the respective third signal-to-noise ratios and the respective fourth signal-to-noise ratios. In this case, the control device 1 selects the relay station 3 in which the respective third signal-to-noise ratios are greater than a threshold value, and selects the second communication station UE in which the fourth signal-to-noise ratio is smaller than the threshold value. For example, when the calculated fourth signal-to-noise ratio is lower than a desired value $\Gamma_L$ for performing the low-latency non-regenerative relay communication, the control device 1 selects the second communication station UE with #j (j= 0 to $N_{UE}-1$) as a relay target. When the calculated third signal-to-noise ratio is greater than a desired value $\Gamma_R = \Gamma_L + M_R$, the control device 1 selects the relay station 3 with #i (i = 0 to $N_R-1$) as a relay target. In this case, # indicates the number. Here, $M_R$ means a margin added to the desired value by the third signal-to-noise ratio. The signal-to-noise ratio is a ratio indicating the amount of noise to the signal. The signal-to-noise ratio may be, for example, a signal-to-noise power ratio or a signal-to-noise amplitude ratio.

Next, in Step S3, the control device 1 notifies the relay station 3 of permission for the non-regenerative relay communication and a desired signal-to-noise ratio $\Gamma_{L,j}$ of the second communication station UE as a relay target from the first communication station BS.

Next, in Step S4, the relay station 3 calculates the first signal-to-noise ratio $\Gamma_{BS \to Ri}$ in the communication between the first communication station BS and the relay station 3 and the first propagation delay $\tau_{BS \to Ri}$ that indicates the delay in the communication between the first communication station BS and the relay station 3 from the notification signal notified in Step S3. In Step S4, the relay station 3 may calculate the allowable delay $\tau_{UE \to R,max}$ that indicates the allowance of the delay in the communication between the relay station 3 and the second communication station UE based on the first propagation delay $\tau_{BS \to Ri}$ and the process delay $\tau_{R,i}$ calculated in Step S1. In this case, the allowable delay $\tau_{UE \to R,max}$ may be calculated using a formula (1).

[Math. 1]

$$\tau_{\mathrm{UE}\to\mathrm{R,max}} = T_{CP} - \tau_{\mathrm{BS}\to\mathrm{R},i} - \tau_{\mathrm{R},i} - \delta \qquad (1)$$

In this case, $T_{CP}$ means a cyclic prefix length, and $\delta$ means a measurement deviation margin.

In Step S4, when the relay station 3 that includes a plurality of the antennas 33 is used as the relay station 3, an antenna weight $w_{R \to BS} = (w_{R \to BS,0}, w_{R \to BS,1}, ..., w_{R \to BS,Nant-1})$ between the first communication station BS and the relay station 3 is optimized from the notification signal notified in Step S3, thereby calculating the first signal-to-noise ratio $\Gamma_{BS \to Ri}$ and the first propagation delay $\tau_{BS \to Ri}$.

Next, in Step S5, the relay station 3 calculates the second signal-to-noise ratio $\Gamma_{UE \to Ri}$ in the communication between the second communication station UE and the relay station 3 and the second propagation delay $\tau_{UE \to Ri}$ that indicates the delay in the communication between the second communication station UE and the relay station 3 based on the reference signal. In this case, the i-th relay station 3 receives the uplink reference signal from the j-th second communication station UE, and calculates the second signal-to-noise ratio $\Gamma_{UE \to Ri}$ and the second propagation delay $\tau_{UR \to Ri}$ based on the uplink reference signal.

In Step S5, when the relay station 3 that includes a plurality of the antennas 33 is used as the relay station 3, the relay station 3 optimizes an antenna weight $w_{R \to UE}$ between the second communication station UE and the relay station 3 based on the reference signal, thereby calculating the second signal-to-noise ratio $\Gamma_{UE \to Ri}$ and the second propagation delay $\tau_{UE \to Ri}$.

Next, in Step S6, whether to perform the non-regenerative relay communication is determined based on the first signal-to-noise ratio $\Gamma_{BS \to Ri}$ and the first propagation delay $\tau_{BS \to Ri}$ calculated in Step S4 and the second signal-to-noise ratio $\Gamma_{UE \to Ri}$ and the second propagation delay $\tau_{UE \to Ri}$; calculated in Step S5. In Step S6, whether to perform the non-regenerative relay communication is determined based on the calculated allowable delay $\tau_{UE \to R,max}$, first signal-to-noise ratio $\Gamma_{BS \to Ri}$, second signal-to-noise ratio $F_{UE \to Ri}$, and second propagation delay $\tau_{UE \to Ri}$. In this case, when the calculated allowable delay $\tau_{UE \to R,max}$ is equal to or more than the second propagation delay $\tau_{UE \to Ri}$, and the first signal-to-noise ratio $\Gamma_{BS \to Ri}$ and the second signal-to-noise ratio $\Gamma_{UE \to Ri}$ are equal to or more than the threshold values, the relay station 3 may perform the non-regenerative relay communication. For example, when a formula (2) is met, the relay station 3 may determine that the non-regenerative relay communication is executed.

[Math. 2]

$$\tau_{\mathrm{UE}\to\mathrm{R}_i} \leq \tau_{\mathrm{UE}\to\mathrm{R,max}} \cap \Gamma_L \leq \Gamma_{\mathrm{UE}\to\mathrm{R}_i} \cap \Gamma_L \leq \Gamma_{\mathrm{BS}\to\mathrm{R}_i} \qquad (2)$$

In Step S7, when it is determined that the non-regenerative relay communication is executed in Step S6, the non-regenerative relay communication between the first communication station BS and the second communication station UE is performed via the relay station 3. In Step S7, when the non-regenerative relay communication is performed, at the time of reception of the signal by the second communication station UE as a relay destination, an additional delay time $\Delta_i$ may be added by the relay station #i and transmitted so as to fall within the time of the cyclic prefix length $T_{CP}$.

While the embodiments of the present invention have been described, the embodiments have been presented as examples, and are not intended to limit the scope of the invention. These novel embodiments can be embodied in a variety of other configurations. Various omissions, substitutions, and changes can be made without departing from the gist of the invention. The embodiments and the modifications thereof are within the scope and the gist of the invention and within the scope of the inventions described in the claims and their equivalents.

DESCRIPTION OF REFERENCE SIGNS

| | |
|---|---|
| 1: | Control device |
| 2: | Base station |
| 3: | Relay station |
| 4: | Terminal station |
| 5: | Central base station |
| 6: | Distributed base station |
| 10: | Housing |
| 11: | Acquisition unit |
| 12: | Calculation unit |
| 13: | Selection unit |
| 14: | Storing unit |
| 15: | Output unit |
| 16: | Determination unit |
| 21: | Radio |
| 22: | Control circuit |
| 23: | Antenna |
| 31: | Radio |
| 32: | Control circuit |
| 33: | Antenna |
| 41: | Radio |
| 42: | Control circuit |
| 43: | Antenna |
| 100: | Non-regenerative relay communication system |
| 101: | CPU |
| 102: | ROM |
| 103: | RAM |
| 104: | Storage unit |
| 105: | I/F |
| 106: | I/F |
| 107: | I/F |
| 108: | Input unit |
| 109: | Display unit |
| 110: | Internal bus |
| 311: | Circulator |
| 312: | Interference cancellation circuit |
| 313: | Receiver |
| 314: | ADC |
| 315: | Baseband signal processing circuit |
| 316: | DAC |
| 317: | Transmitter |
| 320: | Delay device |
| BS: | First communication station |
| UE: | Second communication station |

**Claims**

1. A non-regenerative relay communication system that performs non-regenerative relay communication between a first communication station and a second communication station via a relay station, the system comprising:

first delay calculation means that calculates a first signal-to-noise ratio in communication between the first communication station and the relay station and a first propagation delay that indicates a delay in the communication between the first communication station and the relay station based on a signal transmitted or received in the communication between the relay station and the first communication station;
second delay calculation means that calculates a second signal-to-noise ratio in communication between the second communication station and the relay station and a second propagation delay that indicates a delay in the communication between the second communication station and the relay station based on a signal transmitted or received in the communication between the relay station and the second communication station; and communication determination means that performs the non-regenerative relay communication based on the first signal-to-noise ratio and the first propagation delay calculated by the first delay calculation means and the second signal-to-noise ratio and the second propagation delay calculated by the second delay calculation means.

2. The non-regenerative relay communication system according to claim 1, further comprising:

first matrix calculation means that calculates a first communication channel matrix that indicates a change in a communication signal for each of communication channels between the two or more relay stations and the first communication station based on signals transmitted or received in communication between the two or more relay stations and the first communication station;
second matrix calculation means that calculates a second propagation channel matrix that indicates a change in a communication signal for each of communication channels between the two or more second communication stations and the first communication station based on signals transmitted or received in communication between the two or more second communication stations and the first communication station;
noise ratio calculation means that calculates respective third signal-to-noise ratios in communication between the first communication station and the two or more relay stations from the first communication channel matrix calculated by the first matrix calculation means and respective fourth signal-to-noise ratios in communication between the first communication station and the two or more second communication stations from the second propagation channel matrix calculated by the second matrix calculation means; and
selection means that selects the second communication station and the relay station that perform the non-regenerative relay communication from the two or more relay stations and the two or more second communication stations based on the respective third signal-to-noise ratios and the respective fourth signal-to-noise ratios calculated by the noise ratio calculation means.

3. The non-regenerative relay communication system according to claim 1, further comprising
process delay calculation means that calculates a process delay that indicates a delay for processing self-interference in the communication based on the signal transmitted or received in the communication between the relay station and the first communication station.

4. The non-regenerative relay communication system according to claim 3, wherein
the communication determination means calculates an allowable delay that indicates an allowance of the delay in the communication between the relay station and the second communication station based on the first propagation delay calculated by the first delay calculation means and the process delay calculated by the process delay calculation means, and performs the non-regenerative relay communication based on the calculated allowable delay, the first signal-to-noise ratio, the second signal-to-noise ratio, and the second propagation delay.

5. The non-regenerative relay communication system according to claim 4, wherein
when the calculated allowable delay is equal to or more than the second propagation delay, and the first signal-to-noise ratio and the second signal-to-noise ratio are equal to or more than threshold values, the communication determination means performs the non-regenerative relay communication.

6. The non-regenerative relay communication system according to claim 2, wherein
the selection means selects the relay station in which the third signal-to-noise ratio calculated by the noise ratio calculation means is greater than the threshold value, and selects the second communication station in which the fourth signal-to-noise ratio calculated by the noise ratio calculation means is smaller than the threshold value.

Fig. 1

(a)

100A

CONTROL DEVICE
1

BASE STATION
RADIO 21
CONTROL CIRCUIT 22
2
23

33

RELAY STATION
RADIO 31
CONTROL CIRCUIT 32
3
#N_R
RADIO
CONTROL CIRCUIT
3

43

TERMINAL STATION
RADIO 41
CONTROL CIRCUIT 42
4

(b)

100B

CONTROL DEVICE
1

CENTRAL BASE STATION
CONTROL CIRCUIT 21
22
5

DISTRIBUTED BASE STATION
RADIO
6
23

33

RELAY STATION
RADIO 31
CONTROL CIRCUIT 32
3
#N_R
RADIO
CONTROL CIRCUIT
3

43

TERMINAL STATION
RADIO 41
CONTROL CIRCUIT 42
4

*Fig. 2*

*(a)*

1

*(b)*

1

*Fig. 3*

*(a)*

*(b)*

*Fig. 4*

## Fig. 5

FIRST COMMUNICATION STATION BS · RELAY STATION 3 · SECOND COMMUNICATION STATION UE

S1 — REFERENCE SIGNAL

SELECT TARGET — S2

S3 NOTIFICATION SIGNAL

CALCULATE $\tau_{UE \to R,max}$ — S4

S5 REFERENCE SIGNAL

DETERMINE COMMUNICATION — S6

NON-REGENERATIVE RELAY SIGNAL — S7

NON-REGENERATIVE RELAY SIGNAL

## INTERNATIONAL SEARCH REPORT

| | International application No. |
| --- | --- |
| | **PCT/JP2023/025662** |

**A. CLASSIFICATION OF SUBJECT MATTER**

*H04B 7/15*(2006.01)i; *H04L 5/02*(2006.01)i
FI: H04B7/15; H04L5/02

According to International Patent Classification (IPC) or to both national classification and IPC

**B. FIELDS SEARCHED**

Minimum documentation searched (classification system followed by classification symbols)

H04B7/15; H04L5/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2008-104184 A (NTT DOCOMO, INC.) 01 May 2008 (2008-05-01) | 1, 3 |
| | paragraphs [0057]-[0103], fig. 4 | |
| A | | 2, 4-6 |
| Y | JP 2015-524212 A (THE BOARD OF TRUSTEES OF THE LELAND STANFORD JUNIOR UNIV.) 20 August 2015 (2015-08-20) | 3 |
| | paragraph [0038] | |
| A | | 1-2, 4-6 |
| Y | JP 2018-535625 A (LG ELECTRONICS INC.) 29 November 2018 (2018-11-29) | 3 |
| | paragraphs [0045], [0050]-[0055], [0074], fig. 4, 6, 12 | |
| A | | 1-2, 4-6 |
| A | WO 2009/118780 A1 (FUJITSU LTD.) 01 October 2009 (2009-10-01) | 1-6 |
| | entire text, all drawings | |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 September 2023** | **26 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/025662**

| Patent document cited in search report | | | Publication date (day/month/year) | Patent family member(s) | | | Publication date (day/month/year) |
|---|---|---|---|---|---|---|---|
| JP | 2008-104184 | A | 01 May 2008 | CN | 101166073 | A | |
| JP | 2015-524212 | A | 20 August 2015 | US | 2013/0301488 | A1 | |
| | | | | paragraph [0038] | | | |
| | | | | WO | 2013/185106 | A1 | |
| | | | | CN | 104521148 | A | |
| JP | 2018-535625 | A | 29 November 2018 | US | 2018/0309475 | A1 | |
| | | | | paragraphs [0056], [0061]-[0066], [0085], fig. 4, 6, 12 | | | |
| | | | | WO | 2017/069300 | A1 | |
| | | | | EP | 3367595 | A1 | |
| WO | 2009/118780 | A1 | 01 October 2009 | US | 2010/0330902 | A1 | |
| | | | | entire text, all drawings | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. CHEN** ; **A. B. GERSHMAN** ; **S. SHAHBAZPA-NAHI**. Filter-and-Forward Distributed Beamforming in Relay Networks with Frequency Selective Fading. *IEEE Trans. On Signal Processing*, March 2010, vol. 58 (3)

- **NOGUCHI** ; **HAYASHI** ; **KANEKO** ; **SAKAI**. A Single Frequency Full-Duplex Radio Relay Station for Frequency Domain Equalization Systems. *The Institute of Electronics, Information and Communication Engineers Technical Report*, January 2012, vol. SIP2011-109